# EUROPEAN PATENT SPECIFICATION

(11) **EP 3 163 555 B1**
(45) Date of publication and mention of the grant of the patent: **12.12.2018**
(21) Application number: 16196024.0
(22) Date of filing: 27.10.2016
(51) Int. Cl.: G09F 13/20, G09F 27/00, H04M 1/02, H04M 11/02

(54) **OUTDOOR STATION FOR AN AUDIO AND/OR VIDEO INTERCOMMUNICATION SYSTEM**
OUTDOOR-STATION FÜR EIN AUDIO- UND/ODER VIDEO-KOMMUNIKATIONSAUSTAUSCH-SYSTEM
STATION EXTÉRIEURE POUR UN SYSTÈME D'INTERCOMMUNICATION AUDIO ET/OU VIDÉO

(30) Priority: 27.10.2015 BE 201505692; 17.10.2016 EP 16194138
(43) Date of publication of application: 03.05.2017
(73) Proprietor: Niko NV, 9100 Sint-Niklaas (BE)
(72) Inventor: Van Ranst, Jurgen, 9040 Gent (BE)
(74) Representative: D'Halleweyn, Nele Veerle Trees Gertrudis

(56) References cited:
- EP-A2- 0 532 352
- US-A1- 2007 212 509
- US-A1- 2015 022 620
- US-B1- 6 281 795

## Description

### Technical field of the invention

The present invention relates to an outdoor station for an audio and/or video intercommunication system. More particularly, the present invention relates to a name tag kit for providing and removing a name tag to and from such audio and/or video intercommunication system and to a method for the removal of such name tag.

### Background of the invention

Outdoor stations are devices that are mounted, for example, to a facade of a residence. They are connected to an indoor station that communicates with the outdoor station. When a visitor or user pushes a bell button on the outdoor station, the indoor station which may, for example, be a tablet, smartphone, wall-mounted touch screen or the like, receives a call that can be answered by the indoor user. The indoor user can communicate with the outdoor user, with or without a video feed of the outdoor user.

Nowadays, such outdoor stations more and more have a modern design. These clean and straight designed outdoor stations may have name tags that are flat at the front and are provided flush to the front plate. In such cases, the name tag fits into a dedicated cavity with very low clearance. A disadvantage of that is that the name tag may be very difficult to remove, whenever this is required.

EP 0532352 A2 discloses a name tag including a double-sided pressure sensitive adhesive tape such that the name tag can be attached to a carrier.

A double-sided adhesive tape is also known from US 2007/0212509 A1.

### Summary of the invention

It is an object of embodiments of the present invention to provide a name tag kit according to claim 1 for providing and removing a name tag to and from an audio and/or video intercommunication system and to a method according to claim 6 for the removal of such name tag. In a first aspect, the present invention provides a name tag kit for providing and removing a name tag to and from a light guide of an audio and/or video intercommunication system. The name tag kit comprises a name tag, and a repositionable tape for fixing the name tag to the light guide. The repositionable tape is a double sided tape comprising a carrier and a first liner attached to a front side of the carrier by means of a first glue layer and a second liner attached to a back side of the carrier by means of a second glue layer. The second glue layer is different from the first glue layer in terms of peel-off force.

With peel-of force is meant the force required to remove the tape from the surface on which it sticks.

According to the invention, the first glue layer has a higher peel-off than the second glue layer.

In other words, the repositionable tape is such that it sticks to the name tag with a higher peel-off force than to the light guide. Hence, when the name tag needs to be removed, and a user pulls the name tag, the whole tape will come off, leaving the light guide free of glue or glue and carrier, such that it is totally clean for directly being able to provide a new name tag.

According to the invention, the first liner is easier to peel off than the second liner. In this way, it is easier for a user to use the tape. First the tape is fixed to the name tag by removing the first liner and sticking the tape to the name tag and then the second liner may be removed for sticking the name tag to the light guide.

The carrier may comprise a diffuser layer. This helps to make the light coming even more uniform through the name tag.

According to embodiments of the invention, the name tag kit may furthermore comprise a removal tool for removing the name tag from the light guide.

According to embodiments of the invention, the removal tool may be a non-adhesive tool and the name tag kit furthermore comprises a high tack adhesive for sticking the non-adhesive tool to the name tag.

According to other embodiments, the removal tool may be a high-tack single-sided tape.

In a second aspect, the invention provides a method for removing a name tag from an audio and/or video intercommunication system. The method comprises providing a removal tool according to embodiments of the invention, sticking the removal tool to the name tag, and pulling the removal tool such that the name tag is removed from the audio and/or video intercommunication system.

### Brief description of the drawings

It has to be noted that same reference signs in the different figures refer to same, similar or analogous elements.
Fig. 1 schematically illustrates an exploded perspective view looking from the front to the back of an outdoor station according to embodiments of the invention.
Fig. 2 schematically illustrates an input interface that can be used with an outdoor station according to an embodiment of the invention
Fig. 3A and 3B schematically illustrate an assembled state as seen from the backside (Fig. 3A) and an exploded perspective view looking from the back to the front (Fig. 3B) of an outdoor station according to an embodiment of the invention.
Fig. 4A to 4C schematically illustrate details of a light guide (Fig. 4A), a lighting means and a control means separately (Fig. 4B) and a lighting means and a control means assembled together (Fig. 4C) of an outdoor station according to embodiments of the invention.
Fig. 5 schematically illustrates a control means, a light guide and an input interface of an outdoor station according to embodiments of the invention in an assembled state.
Fig. 6 schematically illustrates a name tag according to embodiments of the invention.
Figs. 7A and 7B schematically illustrate an embodiment of a removal tool which can be used for removing a name tag according to embodiments of the invention.
Fig. 8 schematically illustrates another embodiment of a removal tool which can be used for removing a name tag according to embodiments of the invention.

### Description of illustrative embodiments

In the description different embodiments will be used to describe the invention. Therefore reference will be made to different drawings. It has to be understood that these drawings are intended to be non-limiting, the invention is only limited by the claims. The drawings are thus for illustrative purposes, the size of some of the elements in the drawings may be exaggerated for clarity purposes.

The term "comprising" is not to be interpreted as limiting the invention in any way. The term "comprising", used in the claims, is not intended to be restricted to what means is described thereafter; it does not exclude other elements, parts or steps.

The term "connected" as used in the claims and in the description has not to be interpreted as being restricted to direct connections, unless otherwise specified. Thus, part A being connected to part B is not limited to part A being in direct contact to part B, but also includes indirect contact between part A and part B, in other words also includes the case where intermediate parts are present in between part A and part B.

The present invention provides a name tag kit for providing and removing a name tag to and from a light guide of an audio and/or video intercommunication system. The name tag kit comprises a name tag, and a repositionable tape for fixing the name tag to the light guide. The repositionable tape is a double sided tape comprising a carrier and a first liner attached to a front side of the carrier by means of a first glue layer and a second liner attached to a back side of the carrier by means of a second glue layer. The second glue layer is different from the first glue layer in terms of peel-off force.

The present invention will hereinafter be described by means of different embodiments. It has to be understood that these embodiments are only for the ease of understanding the invention and are not intended to limit the invention in any way.

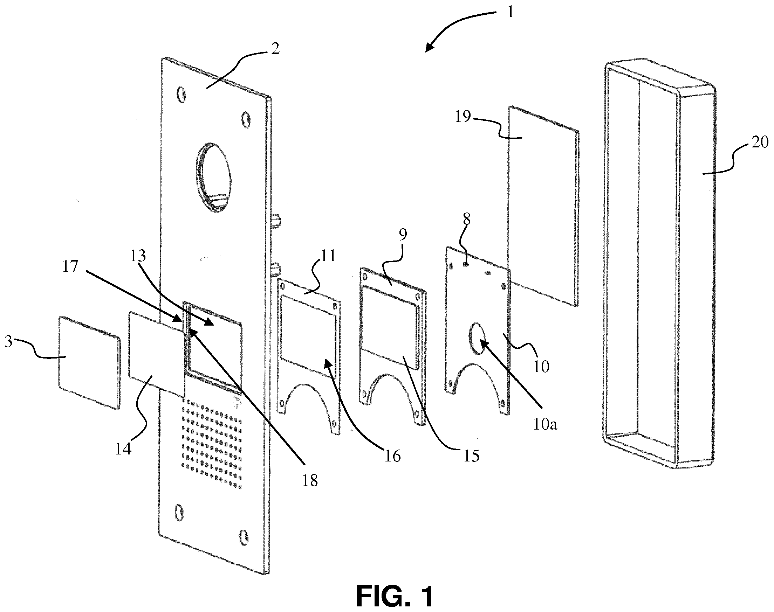

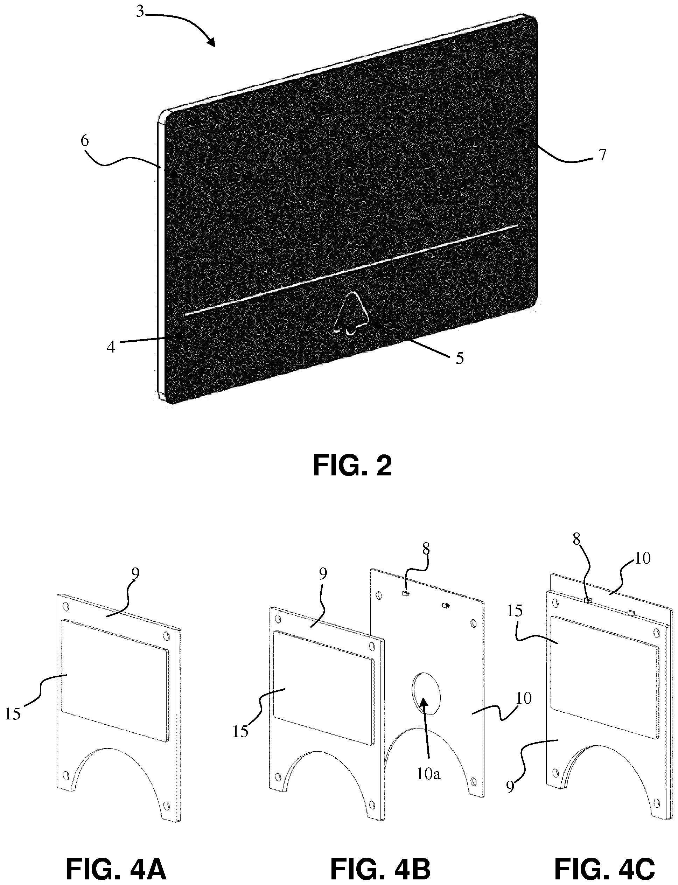

Fig. 1 illustrates an outdoor station 1 according to an embodiment of the invention. The outdoor station 1 comprises a front plate 2 with an input interface 3 with integrated touch area 4 (see Fig. 2). With integrated touch area is meant that the outdoor station 1 does not have a separate, physical touch area. This gives the outdoor station 1 a clean and straight design. According to embodiments of the invention, the input interface 3 may, for example, be a name tag with integrated bell button for initiation a call or may be a keypad for entering a code. Hence, the input interface has as a goal that as a result of interaction of a user with the input interface, access to a building can be obtained. In case of the input interface being a name tag with an integrated bell button, a call is initiated when a user pushes or touches the touch area and a person inside the building can open the door. In case the input interface is a keypad with integrated touch buttons for entering a code, the door can be opened when a correct code is entered.

In the further description of the embodiments the input interface will be described and shown as a name tag with integrated bell button 4, and will for that reason in the description also be referred to as a name tag 3. However, it has to be understood that the principles are evenly applicable to any other suitable input interface with any suitable touch area as known by a person skilled in the art such as, for example, a keypad for entering a code for receiving access to a building.

A detail of the name tag 3 is illustrated in Fig. 2. The name tag 3 has an integrated bell button 4. When a user, e.g. a visitor, touches the bell button, e.g. indicated by a bell icon 5 on that bell button 4, the call will be initiated (see further).

Preferably, the name tag 3 may have a colourless, transparent front side 6 and a back side 7 which is covered with an opaque layer. In the opaque layer, items can be engraved such as for example, the bell icon 5 and/or the name(s) of the resident(s) (not shown) in case of the name tag 3 of the current embodiment or numbers in case of a keypad. According to embodiments of the invention, the opaque layer may be a composite layer of a transparent layer and an opaque layer. For example, the opaque layer may be a co-extrusion of a transparent PMMA layer and an opaque PMMA layer. More in general, the composite layer may comprise a synthetic polymer layer or a glass layer and an opaque paint or metal layer. The composite layer may comprise any combination of a transparent material layer and a layer that blocks the light and in which items can be engraved. According to further embodiments of the invention, the composite layer may also comprise a transparent layer which is covered with a black layer which is, for example, printed on the transparent layer.

Although it is said that items are engraved into the opaque layer on the backside of the name tag 3, it has to be understood that any other suitable method for locally removing material from a layer as known by a person skilled in the art may also be used for providing items such as e.g. a bell icon 5 and/or the name(s) of residents and/or numbers on the name tag, such as, for example, etching or milling.

Because the bell button 4 is integrated in the name tag 3, in a situation of low ambient light or in the absence of light there can be a problem to identify the bell 4 button since the front plate 2 is flat and there is no typical physical bell button present on the front plate 2. Therefore, according to the present invention, the outdoor station 1 furthermore comprises lighting means 8 for illuminating the name tag 3, a light guide 9 and control means 10 for controlling the lighting means 8 such that, during use of the outdoor station 1, the lighting means 8 is always on and goes out for a predefined period of time when a call is initiated when a user touches or pushes the bell button 4 on the name tag 3 and thereby initiates a signal.

An advantage of the above is that the items that are engraved, e.g. the bell icon 5 and/or the name(s) of the resident(s), in the name tag 3 will be lit as long as no users are touching or pushing the bell button 4, while the rest of the name tag 3 remains unlit. This makes the bell icon 5 and the name(s), or any other item that is engraved in the opaque layer clearly visible to the user.

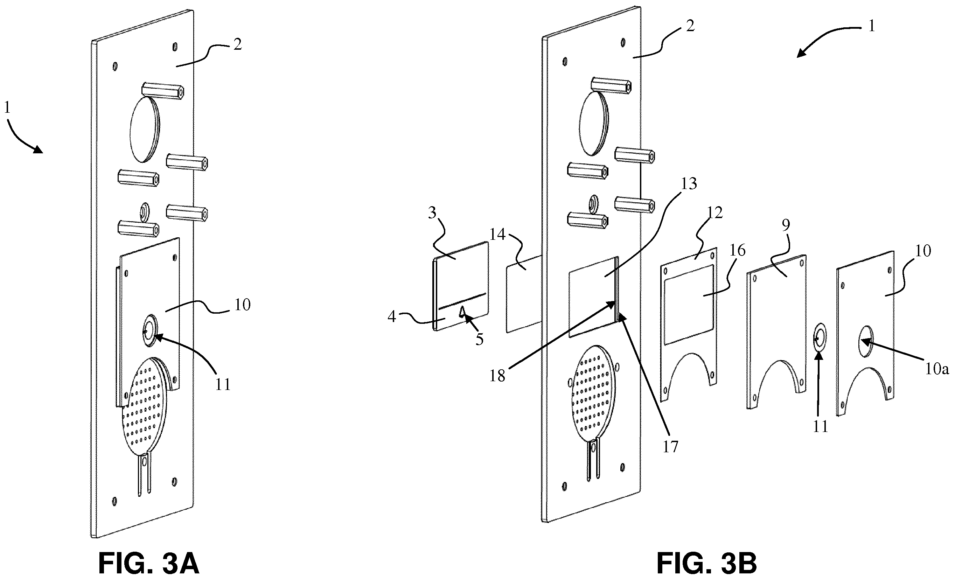

The light guide 9 may comprise a switch element 11 for transferring that signal to the control means 10. The switch element 11 can, for example, be a capacitive switch element, a piezo switch element or an inductive switch element. This is illustrated in Figs. 3A and 3B which respectively show an assembled state and an exploded perspective view looking from the back to the front of an outdoor station 1 according to an embodiment of the invention. The switch element 11 is provided at a backside of the light guide 9 and may be fixed to the light guide 9 by means of, for example, glue. Because the switch element 11 is provided at a backside of the light guide 9, an opening 10a is provided in the control means 10, for properly positioning the switch element 11. When the user touches or pushes the name tag 3, the signal generated by such touching or pushing action will be transferred by the switch element 11 to the control means 10. More particular, in case of the switch element 11 being a piezo switch element as is illustrated in the drawings, the pressure or vibration of such touching or pushing action will induce an electrical charge in the piezo element that is converted into a call notification by the control means.

According to embodiments of the invention, the lighting means 8 may comprise LED lights or may comprise an electroluminescence type of lighting. In case of the lighting means 8 comprising LED lights, these LED lights 8 may be provided on the control means 10 such that it is located at at least one of a top side, a lower side or a side flank of the light guide 9. The location of the LED lights 8 may, for example, depend on the number of name tags 3 that are provided. For example, there may be provided one name tag 3, two name tags 3 or any other suitable number of name tags 3 as required for a particular application. In case of one name tag 3 being present, the lighting means 8 may, for example but not limited to, be located at a top side of the light guide 9 while in case of two or more name tags 3 being present, the lighting means 8 may, for example but not limited to, be located at a side flank of the light guide 9. In case the lighting means 8 comprises an electroluminescence plate, this electroluminescence plate 8 may be provided such that it illuminates the full back side of the light guide 9.

Hence, in any case the lighting of the name tag 3 is realized by the light guide 9. This means that in any case the lighting means 8 is illuminating the light guide 9 and the light guide 9 makes sure that the light finally reaches the name tag 3. Figs. 4A to 4C schematically show details of respectively the light guide 9 (Fig. 4A), the light guide 9 and the control means 10 separately (Fig. 4B) and the light guide 9 and the control means 10 fixed to each other. The light guide 9 may be fixed to the control means 10 by means of screws.

In the example illustrated in Fig. 1 and Figs. 4A to 4C, the lighting means comprises LED lights 8 which are provided on the control means 10 such that it is located at the top side of the light guide 9. Hence, in the example given, the entire light guide 9 is lit by LED lights 8 that are provided on the control means 10.

The back surface of the light guide 9, i.e. the surface of the light guide 9 furthest away from the name tag 3, may be provided with a white layer that diffuses the light, which makes the front side of the light guide 9 light up evenly and optimises the light output. According to embodiments of the invention, also the front side of the light guide 9 may be provided with a white light diffusing layer. This, of course, makes the front side of the light guide 9 light up even more evenly and further optimises the light output.

The name tag 3 may be fixed to the front plate 2 by means of a sealing 12, such as for example a double sided tape or a foam, or any other suitable squeezable or compressible material, such as for example a thermoplastic elastomer (TPE), rubber or other synthetic materials having the same properties as rubber such as e.g. neoprene or silicone. In any case, the sealing 12 should be such that it provides the outdoor station 1 to be waterproof and dustproof, i.e. that no water and/or dust can enter the inside of the outdoor station 1. Thus, the sealing 12 provides a waterproof and dustproof fixing between the front plate 2 and the name tag 3. Further, a back side of the sealing 12, i.e. the side of the sealing 12 facing the light guide 9, may have a white surface for light reflection so as to minimize light loss and maximize brightness of the front surface of the light guide 9. The name tag 3 may be located in a name tag cavity 13 in the front plate 2.

The name tag 3 may be fixed to the light guide 9 via fixing means 14, which may for example be a repositionable tape 14. With repositionable tape is meant that the tape can be replaced whenever this may be necessary, for example when names on the name tag 3 should be changed, added and/or removed. According to embodiments of the invention, the repositionable tape 14 may, for example, be a double-sided tape with a carrier 21. According to embodiments of the invention, the carrier 21 may, for example, be a diffuser film so as to make the light coming from the lighting means 8 even more uniform.

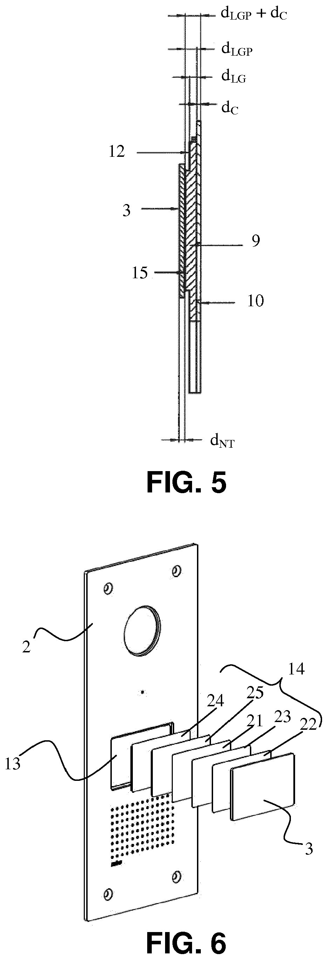

The tape 14 comprises a first liner 22 attached to a front side of the carrier 21 by means of a first glue layer 23 and a second liner 24 attached to a back side of the carrier 21 by means of a second glue layer 25. This is illustrated in Fig. 6. The second glue layer 25 is different from the first glue layer 23 in terms of peel-off force. With peel-off force is meant the force required for removing the tape from the surface to which it sticks. In other words, the tape 14 has to be such that it sticks to the name tag 3 with a higher peel-off force than to the light guide 9. In other words, the first glue layer 23 has a higher peel-off force than the second glue layer 25. In that way, when removing the name tag 3, the tape 14 will always stick to the name tag 3 that is to be removed, leaving the surface of the light guide 9 clean and ready for a new tape 14 and name tag 3.

The choice of tape 14 is thus not straightforward. The tape 14 should have sufficient peel-off force, also referred to as adhesive force, to resist forces of nature, combined with the fact that after time because of, for example, temperature exposure, the peel-off force should not become higher than allowed for being able to be removed. Further, for the ease of application, it is also important that the side with the highest peel-off value is applied to the name tag 3, while the side with the lowest peel-off value is applied to the light guide 9.

Still further, in order to assure flawless application by a customer, the liner of the side with highest peel-off value needs to be the one that is the easiest to be removed from the tape 14. In other words, the first liner 22 may be easier to peel off than the second liner 24. In this way, it is easier for a user to use the tape 14. First the tape 14 may be fixed to the name tag 3 by removing the first liner 22 and sticking the tape 14 to the name tag 3 and then the second liner 24 may be removed for sticking the name tag 3 to the light guide 9.

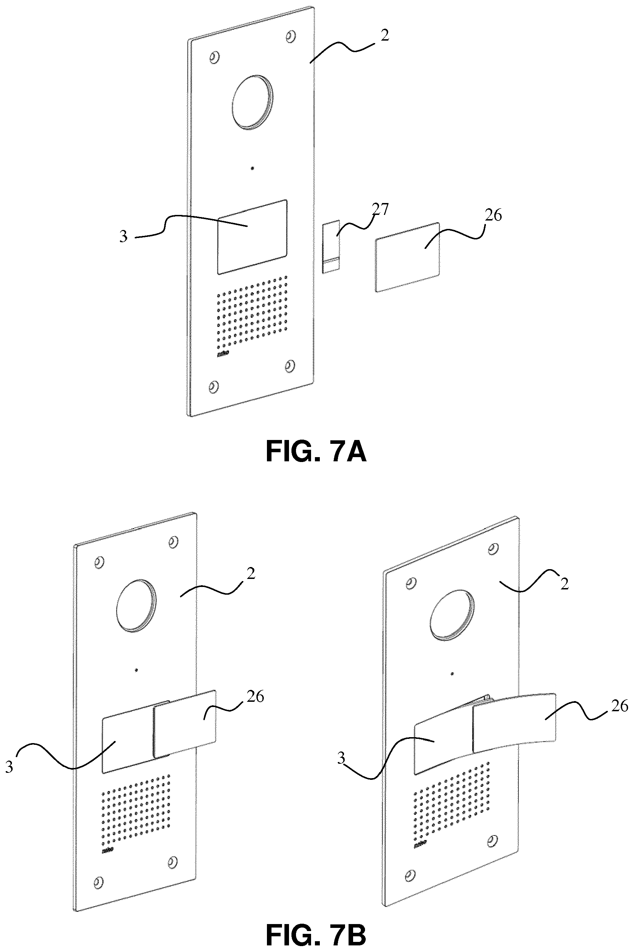

For removing the name tag 3, e.g. when a new name tag has to be provided, a removal tool 26 may be used. According to embodiments of the invention, the removal tool 26 may be a non-adhesive tool that is attached to the name tag 3 by means of a high tack adhesive 27 (see Figs. 7A and 7B). With high tack adhesive is meant that, when the adhesive 27 is brought in between the non-adhesive tool 26 and the name tag 3, the non-adhesive tool 26 is attached to the name tag 3 with high sticking force. The high tack adhesive 27 may be any suitable high tack adhesive as known by a person skilled in the art such as, for example, a high tack double sided tape or fast curing glue such as e.g. cyanoacrylate. Typically, after the high tack adhesive 27 is provided an a short waiting period, which typically may be about one minute, the removal tool 26 will serve as a handle to lift and remove the name tag.

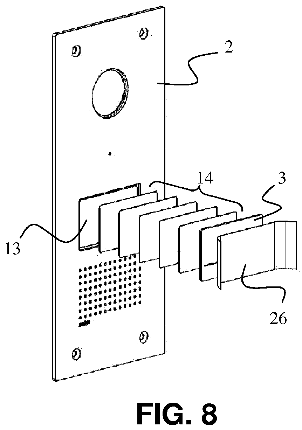

According to other embodiments, the removal tool 26 may be a high tack single-sided tape (see Fig. 8). In that case, the tape 27 itself serves as the handle to pull the name tag 3 out of the name tag cavity 13.

The light guide 9 has a protruding part 15 onto which the name tag 3 may be fixed. The protruding part 15 fits into an opening 16 in the sealing 12 and fits into the name tag cavity 13 in the front plate 2. The name tag cavity 13 is slightly larger than the protruding part 15 of the light guide 9. The borders 17 of the name tag cavity 13 may have upstanding edges 18 which may be made of an opaque material, such as for example aluminium. The combination of the name tag cavity 13 being slightly larger than the protruding part 15 of the light guide 9 and the upstanding edges 18 of the border 17 of the name tag cavity 13 being made of an opaque material makes sure that light cannot leak through the edges between the protruding part 15 of the light guide 9 and the name tag cavity 13 in the front plate 2.

The outdoor station 1 may furthermore comprise a printed circuit board 19 comprising further electronics necessary for making the outdoor station 1 work and a back cover 20 for closing the outdoor station 1 at the back for preventing, for example, dirt and water to enter the outdoor station 1 from the back side.

The name tag 3, or in general the input interface, the light guide 9 and the control means 10 may, when assembled, have a total thickness of between 1.5 mm and 25 mm and may, for example, be between 1.9 mm and 15 mm. According to a specific embodiment, the name tag 3, light guide 9 and control means 10 may, when assembled, have a total thickness of 5.9 mm. Fig. 5 illustrates a specific example of how thin and flat an outdoor station 1 according to embodiments of the invention can be. For example, the control means 10 may have a thickness d_{C} of 1 mm, the light guide 9 without the protrusion 15 may have a thickness d_{LG} of 2 mm and the light guide 9 together with the protrusion 15 may have a thickness d_{LGP} of 3.3 mm. Hence, the thickness d_{LGP} + d_{C} of the light guide 9 with protrusion 15 and the control means 10 may, in the example given, be 4.3 mm. The thickness d_{NT} of the name tag 3 may be 1.6 mm. Hence, in the example given in Fig. 5, the total thickness of the outdoor station 1 without the PCB 19 with electronics and the back cover 20 may be 5.9 mm. It has to be understood that this example is only meant to be an illustration of how thin an outdoor station 1 according to embodiments of the invention can be, but is in no way intended to limit the invention in any way.

The example illustrated above and in the drawings is an outdoor station 1 with one name tag 3. However, it has to be understood that this is not intending to limit the invention in any way. The outdoor station 1 may have any number of name tags 3 as required for a particular application. Furthermore, as already mentioned above, according to further embodiments, the input interface with integrated touch area can, instead of a name tag 3 with an integrated bell button 4, also be a keypad with integrated buttons for entering a code for receiving access to a building. The keypad and integrated buttons may have similar properties and may be illuminated in a same way as described for the name tag 3 with integrated bell button 4. For example, the lighting means 8 may always be on and when a user has entered a code by pushing the numbers on the keypad, the light may go out for a predefined period of time.

## Claims

1. A name tag kit for providing and removing a name tag (3) to and from a light guide (9) of an audio and/or video intercommunication system (1), the name tag kit comprising:
- a name tag (3), and
- a repositionable tape (14) for fixing the name tag (3) to the light guide (9),
wherein the repositionable tape (14) is a double sided tape comprising:
- a carrier (21), and
- a first liner (22) attached to a front side of the carrier (21) by means of a first glue layer (23) and a second liner (24) attached to a back side of the carrier (21) by means of a second glue layer (25), the second glue layer (25) being different from the first glue layer (23) in terms of peel-off force
**characterized in that**
- the first glue layer (23) has a higher peel-off force than the second glue layer (25), and
- the first liner (22) is easier to peel off than the second liner (24).

2. A name tag kit according to claim 1, wherein the carrier (21) comprises a diffuser layer.

3. A name tag kit according to claim 1 or 2, furthermore comprising a removal tool (26) for removing the name tag (3) from the light guide (9).

4. A name tag kit according to claim 3, wherein the removal tool is a non-adhesive tool (26) and the name tag kit furthermore comprises a high tack adhesive for sticking the non-adhesive tool (26) to the name tag (3).

5. A name tag kit according to claim 3, wherein the removal tool is a high-tack single-sided tape (26).

6. A method for removing a name tag (3) from an audio and/or video intercommunication system (1), the method comprising:
- providing a name tag kit according to any of claims 3 to 5,
- sticking the removal tool (26) to the name tag (3), and
- pulling the removal tool (26) such that the name tag (3) is removed from the audio and/or video intercommunication system (1).

## Patentansprüche

1. Namensschildkit zum Bereitstellen und Entfernen eines Namensschilds (3) zu und von einem Lichtleiter (9) eines Audio- und/oder Video-Kommunikationssystems (1), wobei der Namensschildkit umfasst:
- ein Namensschild (3), und
- ein repositionierbares Klebeband (14) zum Befestigen des Namensschildes (3) am Lichtleiter (9),
wobei das repositionierbares Klebeband (14) ein doppelseitiges Klebeband ist, das umfasst:
- einen Träger (21), und
- eine erste Abziehschicht (22), die an der Vorderseite des Trägers (21) mittels einer ersten Klebstoffschicht (23) angebracht ist, und eine zweite Abziehschicht (24), die an der Rückseite des Trägers (21) mittels einer zweiten Klebstoffschicht (25) angebracht ist, wobei die zweite Klebstoffschicht (25) sich von der ersten Klebstoffschicht (23) hinsichtlich der Abziehkraft unterscheidet,
**dadurch gekennzeichnet, dass**
- die erste Klebstoffschicht (23) eine höhere Abziehkraft als die zweite Klebstoffschicht (25) aufweist, und
- die erste Abziehschicht (22) leichter abzuziehen ist als die zweite Abziehschicht (24).

2. Namensschildkit nach Anspruch 1, wobei der Träger (21) eine Diffusorschicht umfasst.

3. Namensschildkit nach Anspruch 1 oder 2, der überdies ein Ablösewerkzeug (26) zum Entfernen des Namensschildes (3) von der Lichtleiter (9) umfasst.

4. Namensschildkit nach Anspruch 3, wobei das Ablösewerkzeug ein Anti-Haft-Werkzeug (26) ist und der Namensschildkit überdies einen Klebstoff mit hoher Klebkraft zum Aufkleben des Anti-Haft-Werkzeugs (26) auf das Namensschild (3) umfasst.

5. Namensschildkit nach Anspruch 3, wobei das Ablösewerkzeug ein einseitiges Klebeband (26) mit hoher Klebkraft ist.

6. Verfahren zum Entfernen eines Namensschildes (3) von einer Audio- und/oder Video-Kommunikationssystems (1), wobei das Verfahren umfasst:
- Bereitstellen eines Namensschildkit nach einem der Ansprüche 3 bis 5,
- Aufkleben des Ablösewerkzeugs (26) auf das Namensschild (3), und
- Ziehen an dem Ablösewerkzeugs (26), so dass das Namensschild (3) von der Audio- und/oder Video-Kommunikationssystems (1) entfernt wird.

## Revendications

1. Kit de plaque nominative pour fournir et retirer une plaque nominative (3) à et d'un guide de lumière (9) d'un système d'intercommunication audio et/ou vidéo (1), le kit de plaque nominative comprenant :
- une plaque nominative (3), et
- un ruban repositionnable (14) pour fixer la plaque nominative (3) au guide de lumière (9), dans lequel le ruban repositionnable (14) est un ruban double-face comprenant :
- un porteur (21), et
- un premier revêtement (22) relié à un côté avant du porteur (21) au moyen d'une première couche de colle (23) et un second revêtement (24) relié à un côté arrière du porteur (21) au moyen d'une seconde couche de colle (25), la seconde couche de colle (25) étant différente de la première couche de colle (23) en termes de force de détachement
**caractérisé en ce que**
- la première couche de colle (23) a une force de détachement supérieure à celle de la seconde couche de colle (25), et
- le premier revêtement (22) est plus facile à détacher que le second revêtement (24).

2. Kit de plaque nominative selon la revendication 1, dans lequel le porteur (21) comprend une couche de diffusion.

3. Kit de plaque nominative selon la revendication 1 ou 2, comprenant en outre un outil de retrait (26) pour retirer la plaque nominative (3) du guide de lumière (9).

4. Kit de plaque nominative selon la revendication 3, dans lequel l'outil de retrait est un outil non adhésif (26) et le kit de plaque nominative comprend en outre un adhésif à haute pégosité pour coller l'outil non adhésif (26) à la plaque nominative (3).

5. Kit de plaque nominative selon la revendication 3, dans lequel l'outil de retrait est un ruban monoface à haut pégosité (26).

6. Procédé de retrait d'une plaque nominative (3) d'un système d'intercommunication audio et/ou vidéo (1), le procédé comprenant :
- la fourniture d'un kit de plaque nominative selon l'une quelconque des revendications 3 à 5,
- le collage de l'outil de retrait (26) à la plaque nominative (3), et
- le fait de tirer l'outil de retrait (26) de sorte que la plaque nominative (3) est retirée du système d'intercommunication audio et/ou vidéo (1).
